Europäisches Patentamt

European Patent Office

Office européen des brevets

(11) Numéro de publication : **0 524 304 B1**

# (12) FASCICULE DE BREVET EUROPEEN

(45) Date de publication du fascicule du brevet :
**27.12.95 Bulletin 95/52**

(51) Int. Cl.$^6$ : **H02J 7/00,** H02J 7/35,
H01M 10/46, H01M 2/10,
G01R 31/36

(21) Numéro de dépôt : **92906535.7**

(22) Date de dépôt : **12.02.92**

(86) Numéro de dépôt international :
**PCT/FR92/00124**

(87) Numéro de publication internationale :
**WO 92/15140 03.09.92 Gazette 92/23**

(54) COMPOSANT D'ALIMENTATION DU TYPE CARTE DE CREDIT

(30) Priorité : **13.02.91 FR 9101976**

(43) Date de publication de la demande :
**27.01.93 Bulletin 93/04**

(45) Mention de la délivrance du brevet :
**27.12.95 Bulletin 95/52**

(84) Etats contractants désignés :
**DE ES FR GB IT**

(56) Documents cités :
**EP-A- 0 074 444
EP-A- 0 108 492
EP-A- 0 225 106
DE-A- 3 702 796
FR-A- 2 337 962
GB-A- 2 116 728
GB-A- 2 214 008
US-A- 4 947 123
IEEE SPECTRUM, vol. 26, no. 8, 26 Août 1989,
New York, US, pp. 32-35; M. ZAFAR et al.: 'Flat
Polymer Electrolytes Promises Thin-film
Power'
PATENT ABSTRACTS OF JAPAN vol. 13, no.
106 (E-726) 14 Mars 1989 ; & JP-A-63 276 836**

(56) Documents cités :
**PATENT ABSTRACTS OF JAPAN vol. 13, no.
439 (E-827) 3 Octobre 1989 ; & JP-A-1 167 944
PATENT ABSTRACTS OF JAPAN vol. 11, no.
161 (E-509)(2608) 23 Mai 1987 ; & JP-A-61 294
754**

(73) Titulaire : **INSTITUT NATIONAL
POLYTECHNIQUE DE GRENOBLE
46, avenue Felix-Viallet
F-38031 Grenoble (FR)**
Titulaire : **ACEP INC.
455, boulevard René-Levesque-Ouest,
Suite 1700
Montreal, Quebec H2Z 1Z2 (CA)**

(72) Inventeur : **ARMAND, Michel
Les Corjons
F-38410 Saint-Martin-d'Uriage (FR)**
Inventeur : **BALME, Louis
21, rue de Stalingrad
F-38100 Grenoble (FR)**
Inventeur : **SILVY, Carole
19 bis, rue de Stalingrad
F-38100 Grenoble (FR)**

(74) Mandataire : **de Beaumont, Michel
1bis, rue Champollion
F-38000 Grenoble (FR)**

EP 0 524 304 B1

## Description

La présente invention concerne le danaine des dispositifs de stockage d'énergie électrique, et plus particulièrement du stockage de l'énergie électrique destinée à des systèmes comprenant des circuits intégrés microélectroniques dotés de mémoires.

Actuellement, les principales sources d'alimentation en énergie électrique des circuits microelectroniques (de la puce au système électronique complet remplissant une fonction bien définie) sont essentiellement au nombre de trois :

premièrement, le secteur 110 ou 220 volts à partir duquel, après abaissement de la tension par transformateur, redressement, filtrage et régulation ou utilisation de techniques à découpage, une tension continue (habituellement de 5 à 15 V) est délivrée au circuit microélectronique ;

deuxièmement, la pile, source autonome d'alimentation de dispositifs électroniques, à durée de vie limitée et jetable ;

troisièmement, la batterie rechargeable dont la forme la plus ancienne est l'accumulateur au plomb et la plus courante actuellement dans le domaine de l'alimentation des circuits électroniques la batterie au cadmium nickel.

L'alimentation par secteur présente bien sûr l'avantage de fournir une énergie quasiment inépuisable (pour autant que le réseau alternatif 110 ou 220 V est convenablement approvisionné) mais présente par contre des inconvénients majeurs parmi lesquels l'encombrement, le poids, le bruit, les parasites et l'absence d'autonomie.

La pile présente comme inconvénient une durée de vie limitée, une fiabilité plutôt mauvaise en milieu hostile et un coût élevé.

On tend donc à s'orienter de plus en plus vers la batterie rechargeable. Autonome comme la pile, cette dernière résout le problème de la durée de vie du fait de la possibilité d'un certain nombre de recharges, variable suivant la nature électrochimique de la source d'énergie. Le problème de fiabilité reste néanmoins important. De plus, les circuits de recharge des batteries rechargeables sont généralement relativement complexes, et générateurs de bruit électromagnétique et, s'ils sont montés de façon interne au système que l'on veut alimenter, ils sont encombrants et occupent une surface importante sur une carte de circuit imprimé prévue dans le système.

Il est connu de la publication IEEE Spectrum, Vol. 26, No 8, 26 août 1989, pages 32 à 35, M. ZAFAR et AL "Flat polymer electrolytes promise thin-film power", une carte de crédit comprenant au moins un accumulateur constitué d'un empilement de feuilles ou couches planes, au moins un circuit de charge et un microcontrôleur.

Un objet de la présente invention est de prévoir un système de batterie muni de tous ses éléments de recharge et de test se présentant sous la forme d'un composant autonome.

Un objet plus particulier de la présente invention est de réaliser un tel composant autonome se présentant sous le format actuellement standardisé d'une carte de crédit (carte mince rectangulaire d'une dimension de l'ordre de 85 x 54 cm).

Pour atteindre ces objets, la présente invention prévoit un composant électronique portable autonome en format carte de crédit comprenant au moins un accumulateur constitué d'un empilement de feuilles ou couches planes dont la surface est sensiblement égale à celle de la carte de crédit, au moins un circuit de charge, et des indicateurs d'état pilotés par un microcontrôleur associé à des moyens pour mesurer à des intervalles de temps brefs et réguliers le courant dans l'ensemble d'accumulateurs et des moyens pour calculer, mémoriser et sommer les variations de charge.

Les indicateurs d'état comprennent un indicateur de nombre résiduel de recharges possibles associé aux moyens pour sommer les variations de charge pendant les phases de décharge.

Les indicateurs d'état comprennent un indicateur de taux de charge associé aux moyens pour sommer les variations de charge pendant les phases de charge et de décharge.

Selon un mode de réalisation de la présente invention, les indicateurs d'état comprennent un indicateur de consommation instantanée associé à des moyens pour mesurer la variation de tension à des intervalles de temps réguliers.

De préférence, l'accumulateur est un accumulateur à électrolyte solide polymère mis en oeuvre par des technologies de couches minces d'une épaisseur de 1 à 500 micromètres présentant des caractéristiques d'autodécharge inférieures à 5% de sa capacité nominale par an.

Selon un mode de réalisation de la présente invention, l'une des faces externes du composant comporte un réseau de cellules solaires. Cette face externe, ou l'autre, comporte une plage d'électrodes de recharge, d'utilisation et d'échange de données avec l'extérieur au format standard des cartes de crédit.

Selon un mode de réalisation de la présente invention, ce composant comporte, au-dessus de l'empilement de feuilles constituant l'accumulateur, au moins une carte de circuit imprimé, une au moins de ces cartes étant munie d'ouvertures dans lesquelles sont logés certains au moins des éléments de circuit électronique nécessaires au fonctionnement du composant et la carte supérieure étant munie d'ouvertures dans lesquelles sont logés les indicateurs d'état dont les faces apparentes sont tournées vers l'extérieur.

Selon un mode de réalisation de la présente invention, ce composant comporte un clavier de codage.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1 illustre les divers éléments incorporés dans un composant autonome selon la présente invention ;

la figure 2.1 représente schématiquement une cellule de batterie selon la présente invention vue de dessus ; et la figure 2.2 représente la même cellule vue en coupe ;

la figure 3 représenteschématiquement et en coupe l'agencement des éléments d'une structure constituant un mode de réalisation de la présente invention ; et

la figure 4.1 représente une vue de dessus schématique de la structure de la figure 3 ; et la figure 4.2 représente une vue de dessous schématique de la structure de la figure 3.

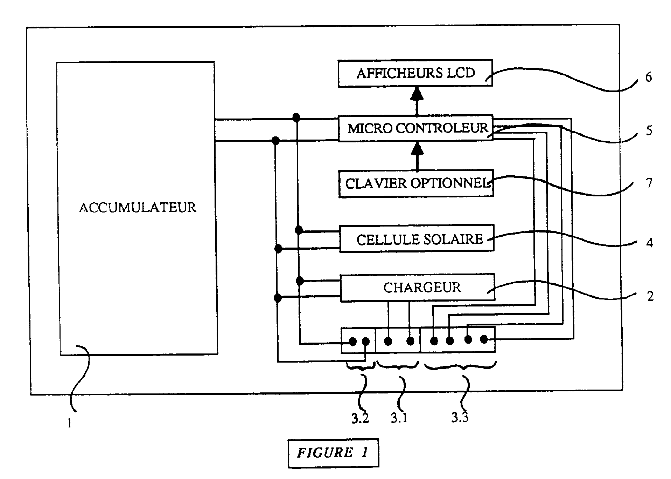

L' alimentation par batterie selon la présente invention comprend pour sa recharge et sa surveillance un ensemble d'éléments du type de ceux illustrés en figure 1. Dans cette figure, on a représenté un ensemble d'accumulateurs 1, un circuit de recharge 2, un connecteur 3 comprenant des bornes de charge 3-1, des bornes d'utilisation 3-2 et des bornes d'échange de données 3-3, une cellule solaire 4, constituant un autre moyen de charge, un microcontrôleur 5 associé à des circuits d'affichage 6 pour fournir diverses informations sur l'état des accumulateurs 1, et un clavier optionnel 7 d'entrée de données.

Comme on l'a exposé précédemment, l'ensemble de ces éléments se trouve généralement dispersé sous forme de divers composants montés en divers emplacements d'un système, éventuellement sur une même carte de circuit imprimé.

Le but de la présente invention est d'une part de rassembler ces composants sous forme d'un objet portable unique ayant le format d'une carte de crédit, d'autre part de prévoir des modes spécifiques de test et d'affichage de l'état de l'accumulateur 1 pour permettre une utilisation de moyens communs pour la réalisation des divers tests et donc simplifier le système et réduire ses dimensions.

Dans ce but, la présente invention prévoit d'utiliser comme source d'énergie un accumulateur présentant des caractéristiques négligeables d'autodécharge formé à partir de feuilles ou couches.

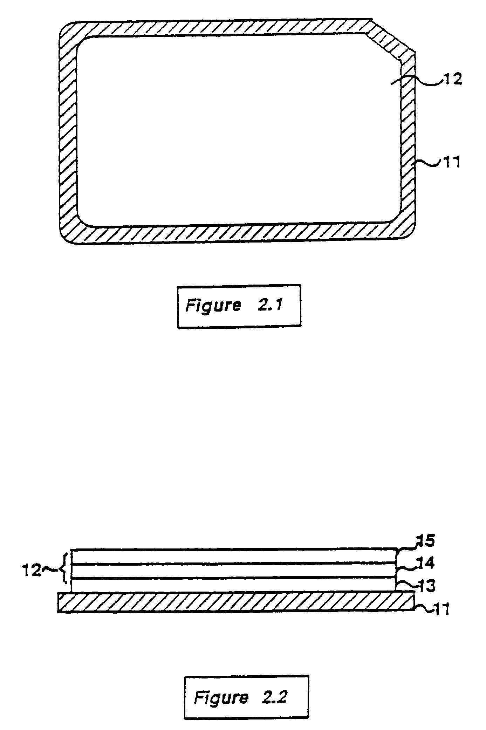

Un exemple non limitatif d'un tel accumulateur est illustré en figures 2.1 et 2.2. Il comprend sur une anode métallique 11 servant de collecteur de courant, un ensemble 12 comprenant une couche d'anode composite à base de lithium 13, un électrolyte polymère 14, et une cathode 15 constituée d'un matériau composite plastique.

Classiquement, chacune des couches 11, 13, 14 et 15 a une épaisseur de l'ordre de 50 $\mu$m. Ainsi, l'épaisseur d'ensemble d'une cellule telle que celle de la figure 2.2 peut être de l'ordre de 0,2 mm.

La présente invention prévoit d'utiliser un tel ensemble de couches sur sensiblement toute la surface disponible dans une structure de type carte de crédit, ayant classiquement des dimensions de 85 x 54 mm soit environ 40 cm². Avec une telle cellule, on a une capacité nominale d'un milliampère-heure par cm² (mAh/cm²) et une tension nominale de 3 V. Cette cellule présente l'avantage de pouvoir supporter de l'ordre de 1000 cycles de recharge avec décharge profonde au lieu de seulement 500 cycles pour des accumulateurs au nickel cadmium. En outre, le taux de décharge est inférieur à 0,01 % par an à 25°C au lieu de 25 % par mois pour le nickel cadmium. De plus, ce dispositif peut fonctionner dans une plage de température de -20 à +150°C.

Ainsi, dans un film rectangulaire de 8 x 5 cm d'une épaisseur de 0,2 mm, on obtient une tension de 3 volts et une capacité nominale de 40 mAh. Pour obtenir une tension de 6 volts, on peut former un bloc en associant deux cellules élémentaires en série. Cinq blocs en parallèle fourniront un potentiel de 6 volts avec une capacité nominale de 200 mAh.

Ainsi, la présente invention prévoit un accumulateur sous un format de carte de crédit à structure à électrodes planes du type de celle des figures 2.1 et 2.2.

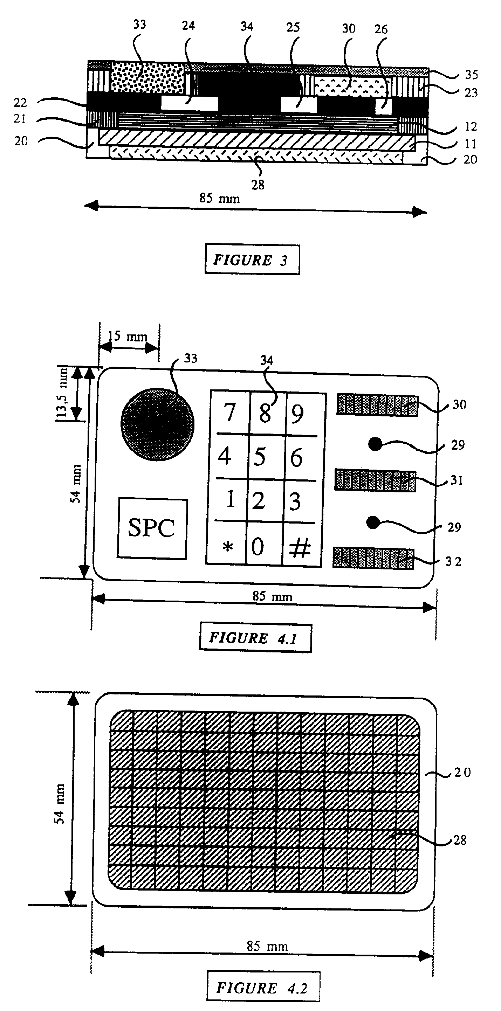

Un exemple d'un tel assemblage est illustré en figure 3. On a représenté les plaques d'accumulateur 11 et 12 de la figure 2, la plaque 11 étant en débordement par rapport à la plaque 12 pour pouvoir prendre un contact d'anode sur sa face supérieure.Il est clair qu'on pourra également utiliser un empilement de cellules. Ces couches sont formées ou assemblées sur un support 20 constitué d'un film de matière plastique formant la face inférieure de la cellule, film lui-même évidé pour laisser la place à une plage de cellules solaires 28.

Une première plaque de circuit imprimé 21 est destinée notamment à établir le contact avec l'anode 11. Une deuxième plaque de circuit imprimé 22 et une troisième plaque de circuit imprimé 23 sont également représentées.

La plaque de circuit imprimé 22 est illustrée comme comprenant des ouvertures 24 à 26. Dans ces ouvertures, pourront être placés des circuits intégrés ou autres composants électroniques, par exemple un circuit intégré comprenant tous les composants nécessaires à la recharge de l'accumulateur à partir du secteur, le microcontrôleur 5 de la figure 1, etc. Les surfaces du circuit imprimé 22 comprennent les moyens nécessaires à la liaison entre les divers composants et les électrodes de l'accumulateur 11, 12.

Dans la plaque de circuit imprimé 23 sont insérés, dans une première ouverture, une plage d'électrodes de recharge, d'utilisation et d'échange de données 33 au standard géométrique des cartes de crédit du marché, et, dans diverses ouvertures 29 à 32 (voir la figure 4), des dispositifs d'affichage. L'ensemble peut être recouvert d'un film transparent en matière plastique 35 qui laisse apparentes les électrodes du connecteur 33. L'ouverture 29 laisse apparaitre deux voyants, témoins de cellule solaire et de circuit de recharge. Les ouvertures 30 à 32 laissent apparaître par exemple des affichages à cristaux liquides, respectivement de taux de charge, de consommation instantanée et de capital vie résiduel comme cela sera détaillé ci-après.

En effet, un aspect de la présente invention est de prévoir la visualisation d'informations d'état pour fournir un accumulateur réellement autonome et fiable fournissant en permanence des indications sur son état.

D'une manière générale, la mesure de la tension aux bornes d'une batterie fournit une mesure peu fidèle de l'état de charge de cette batterie. En effet, la courbe de décharge/ recharge est très peu linéaire dans la plage de tension utile et, de surcroît, dépend de la charge connectée à la batterie.

La présente invention prévoit de faire fonctionner le microcontrôleur susmentionné de façon à effectuer des mesures du courant $I_i$ traversant la batterie à des instants $t_i$ séparés par des intervalles de temps réguliers $\Delta t$. $\Delta t$ est choisi suffisamment petit pour que l'on puisse considérer que le courant est constant perdant un intervalle de temps $\Delta t$. Alors, la variation de charge $\Delta Q_i$ dans la batterie est :

$$\Delta Q_i = I_i \Delta t,$$

I étant négatif en cas de décharge et positif en cas de recharge. Connaissant la charge maximale $Q_{max}$ de la batterie, qui est une donnée caractéristique de celle-ci, on somme ces variations de charge dans un registre :

$$\sum_i \Delta Q_i = \sum_i \Delta t I_i$$

A tout instant, on calcule l'état de charge $\eta$ :

$$\eta = 100[1 + \Sigma \Delta Q_i / Q_{max}], \text{ en \%.}$$

Lorsque la batterie atteint la décharge profonde, on a :

$$\Sigma \Delta Q_i = -Q_{max}$$
$$\eta = 0\%$$

Lorsque la batterie est complètement rechargée, on a :

$$\Sigma \Delta Q_i = 0$$
$$\eta = 100 \%,$$

et on remet le registre à zéro.

Cette opération simple est facilement réalisée par un microcontrôleur incorporant des fonctions de calcul, de mémoire, d'entrées-sorties analogiques et de commande de visualisation. De plus, on prévoit que, quand l'état de charge mesuré devient inférieur à un seuil déterminé, le processeur inhibe la sortie sur le circuit d'utilisation pour éviter de décharger excessivement la batterie, ce qui pourrait la dégrader et pour maintenir en fonctionnement le microcontroleur et ses mémoires associées.

La mesure de la consommation instantanée est faite de façon analogue en mesurant à chaque intervalle de temps $\Delta t$ la valeur de la tension aux bornes de l'accumulateur et en calculant la différence $\Delta V$ par rapport à la tension mesurée lors de l'intervalle de temps précédent. La valeur $\Delta V / \Delta t$ donne un débit de batterie ou consommation instantanée.

Selon un aspect de la présente invention, il est également prévu de mesurer le capital vie résiduel de la batterie. En effet, une batterie peut subir un nombre déterminé de décharges et de recharges. Elle a une durée de vie de N cycles complets et une capacité égale à $NxQ_{max}$. Mais en fait, la mesure est plus complexe étant donné qu'il arrive que l'on recharge la batterie alors qu'elle n'est pas encore complètement déchargée. On se sert donc de la mesure de la variation de charge ($\Delta Q = I \Delta t$) mentionnée pour la mesure du taux de charge. On mémorise dans un registre la charge totale délivrée par la batterie depuis sa mise en route, $Q^- = \Sigma \Delta Q^-$, avec $\Delta Q^- = I \Delta t$ pendant les seules périodes de décharge. le capital vie résiduel s'exprime alors par :

$$1 - Q^- / N Q_{max}.$$

On peut prévoir que l'affichage disposé dans l'ouverture 32 susmentionnée fournisse une indication sur le capital vie résiduel de la batterie.

La carte selon l'invention comprend un connecteur du type classiquement utilisé avec les cartes de crédit (connecteur 33 des figures 3 et 4.1) et pourra facilement s'adapter à des appareils munis d'ouvertures propres à recevoir des cartes de crédit traditionnelles.

La présente invention est susceptible de nombreuses variantes et modifications qui apparaitront à l'homme de l'art, tant en ce qui concerne le choix que la disposition de ses composants.

Un clavier de codage 34 (figures 3 et 4.1) peut être prévu pour permettre un accès controlé à la source comprise sur la carte ou à une source externe.

Notamment, l'homme de l'art saura choisir et programmer un microcontrôleur muni de moyens de mémoire et de commande d'affichage pour satisfaire les fonctions énoncées ci-dessus, par exemple le microcontrôleur $\mu$pD75328 GC commercialisé par la société dite Nippon Electric Corp.

En outre, la disposition décrite en relation avec la figure 3 ne constitue qu'un exemple de réalisation possible de l'invention, l'homme de l'art pourra prévoir des moyens autres qu'un empilement de trois cartes de circuits imprimés pour associer, selon un format de carte de crédit, divers composants de charge et de mesure à un accumulateur constitué d'une association de feuilles ou couches planes.

Par ailleurs, le composant autonome de batterie et de test selon la présente invention a été décrit ci-dessus dans le cadre d'une utilisation en auto-test, c'est-à-dire que les éléments de test étaient utilisés pour tester la batterie du composant lui-même.

Ce composant autonome, associé au clavier de codage susmentionné, pourrait aussi être utilisé comme complément d'une source d'énergie principale pour :
- la mettre en route,
- surveiller ses paramètres de charge, consommation instantanée et capital résiduel,
- la protéger contre toute utilisation frauduleuse,
- mémoriser son fonctionnement,
- l'arrêter...

Ce type d'application peut en particulier se rencontrer dans le cadre de véhicules à traction électrique où le composant selon la présente invention pourra servir de jauge des batteries principales du véhicule et de clef de contact électronique.

## Revendications

1. Composant électronique portable autonome en format carte de crédit, comprenant
au moins un accumulateur (1) constitué d'un empilement de feuilles ou couches planes (11, 12) dont la surface est sensiblement égale à celle de la carte de crédit,
au moins un circuit de charge (2, 4),
un microcontrôleur associé à des moyens pour mesurer à des intervalles de temps brefs et réguliers ($\Delta t$) le courant (I) positif ou négatif dans l'accumulateur et des moyens pour calculer, mémoriser et sommer les variations de charge ($\Delta Q = I\Delta t$),
un indicateur de nombre résiduel de recharges possibles utilisant le résultat $Q^-$ de la sommation des variations de charge pendant les phases de décharge et affichant le résultat de la relation $1 - Q^-/NQ_{max}$, et
un indicateur de taux de charge utilisant le résultat $\Sigma\Delta Q_i$ de la sommation des variations de charge pendant les phases de charge et de décharge et affichant le résultat de la relation $\eta = 100[1 + \Sigma\Delta Q_i/Q_{max}]$, en %,
où $Q_{max}$ désigne la valeur prédéterminée de charge maximale de l'accumulateur et N la valeur prédéterminée de son nombre maximal de recharges complètes.

2. Composant selon la revendication 1, caractérisé en ce qu'il comprend en outre un indicateur de consommation instantanée associé à des moyens pour mesurer la variation de tension ($\Delta V$) auxdits intervalles de temps réguliers ($\Delta t$).

3. Composant selon la revendication 1, caractérisé en ce que l'accumulateur est un accumulateur à électrolyte solide polymère mis en oeuvre par des technologies de couches minces d'une épaisseur de 1 à 500 micromètres.

4. Composant selon la revendication 1, caractérisé en ce que l'une de ses faces externes comporte un réseau de cellules solaires.

5. Composant selon la revendication 1, caractérisé en ce que l'une de ses faces externes comporte une plage d'électrodes de recharge, d'utilisation et d'échange de données aux formes géométriques du standard des cartes de crédit.

6. Composant selon la revendication 1, caractérisé en ce qu'il comporte, au-dessus de l'association de feuilles (11, 12) constituant l'accumulateur, au moins une carte de circuit imprimé (21, 22, 23), une au moins de ces cartes étant munie d'ouvertures (24, 25, 26) dans lesquelles sont logés certains au moins des éléments de circuit électronique nécessaires au fonctionnement du composant et la carte supérieure (23) étant munie d'ouvertures (29-32) dans lesquelles sont logés les indicateurs d'état dont les faces apparentes sont tournées vers l'extérieur.

7. Composant selon la revendication 1, caractérisé en ce qu'il comprend des moyens pour connecter ses indicateurs d'état à une batterie externe.

8. Composant selon la revendication 1, caractérisé en ce qu'il comprend en outre un clavier de codage controlant des moyens pour déterminer l'accès à la source d'alimentation interne ou à une source d'alimentation externe.

9. Composant selon la revendication 1, caractérisé en ce qu'il comprend en outre des moyens pour inhiber la sortie de l'aocumulateur quand son état de charge est inférieur à un seuil prédéterminé.

## Patentansprüche

1. Unabhängiges, tragbares, elektronisches (Bau-) Teil im Kreditkartenformat, das folgendes aufweist:
mindestens einen Akkumulator (1), der aus einem Stapel Flächenelemente oder ebener Schichten (11, 12) gebildet ist und dessen Oberfläche im wesentlichen gleich der Oberfläche der Kreditkarte ist,
mindestens eine Ladeschaltung (2, 4),
einen Microcontroller bzw. eine Mikro-Steuervorrichtung, der mit Mitteln zum Messen des positiven oder negativen Stroms (I) in dem Akkumulator in kurzen, regelmäßigen Zeitintervallen (Δt) und mit Mitteln zum Berechnen, Speichern und Addieren der Ladeabweichungen bzw. -veränderungen (ΔQ = IΔt) assoziiert ist,
eine Anzeige der Restzahl möglicher Wiederaufladungen, welche das Ergebnis $Q^-$ der Summe der Ladeabweichungen bzw. -veränderungen während der Entladephasen verwendet und das Ergebnis der Beziehung 1 - $Q^-/NQ_{max}$ anzeigt, und
eine Anzeige des Ladeverhältnisses, welche das Ergebnis $\Sigma Q_i$ der Addition der Ladeabweichungen bzw. -veränderungen während der Lade- und Entladephasen verwendet und das Ergebnis der Beziehung $\eta = 100[1+\Sigma Q_i/Q_{max}]$ in % anzeigt, wobei $Q_{max}$ den vorbestimmten Wert der maximalen Ladung des Akkumulators bezeichnet und N den vorbestimmten Wert der maximalen Zahl vollständiger Wiederaufladungen bezeichnet.

2. Teil gemäß Anspruch 1, dadurch gekennzeichnet, daß es ferner eine Anzeige des momentanen Verbrauchs aufweist, die mit Mitteln zum Messen der Spannungsabweichung bzw. -veränderung (ΔV) in den regelmäßigen Zeitintervallen (Δt) assoziiert ist.

3. Teil gemäß Anspruch 1, dadurch gekennzeichnet, daß der Akkumulator ein Polymer-Festkörper-Elektrolyt-Akkumulator aus dünnen Schichten mit einer Dicke von 1 bis 500 Mikrometern ist.

4. Teil gemäß Anspruch 1, dadurch gekennzeichnet, daß eine seiner Außenseiten eine Solarzellenanordnung aufweist.

5. Teil gemäß Anspruch 1, dadurch gekennzeichnet, daß eine seiner Außenseiten eine Elektroden- bzw. Kontaktfläche für Wiederaufladung, Verwendung und Austausch von Daten aufweist, und zwar in der geometrischen Standardform für Kreditkarten.

6. Teil gemäß Anspruch 1, dadurch gekennzeichnet, daß es über der Flächenelement- bzw. Schichtanordnung (11, 12), die den Akkumulator bildet, mindestens eine Chipkarte (21, 22, 23) aufweist, wobei mindestens eine dieser Karten mit Öffnungen (24, 25, 26) versehen st, in denen mindestens einige der elektronischen Schaltungselemente aufgenommen sind, die notwendig sind für die Funktion des (Bau-)Teils, und wobei die oberste Karte (23) mit Öffnungen (29-32) versehen ist, in denen die Zustandsanzeigen von außen sichtbar bzw. ablesbar aufgenommen sind.

7. Teil gemäß Anspruch 1, dadurch gekennzeichnet, daß es Mittel zum Verbinden der Zustandsanzeigen mit einer externen Batterie aufweist.

8. Teil gemäß Anspruch 1, dadurch gekennzeichnet, daß es ferner eine Kodierungstastatur aufweist, das Mittel zum Bestimmen des Zugriffs auf eine interne Versorgungsquelle oder eine externe Versorgungsquelle steuert bzw. kontrolliert.

9. Teil gemäß Anspruch 1, dadurch gekennzeichnet, daß es ferner Mittel zum Sperren der Ausgabe des Akkumulators aufweist, wenn sein Ladezustand unterhalb einer vorbestimmten Schwelle ist.

## Claims

1. A self-contained portable electronic component having a credit card format comprising:
   at least an accumulator (1) made of a pile of sheets or planar layers (11, 12), the surface of which is substantially equal to the surface of the credit card,
   at least a charge circuit (2, 4),
   a microcontroller associated with means for measuring at short and regular time intervals Δt the positive or negative current (I) in the accumulator and means for calculating, storing and summing the charge variations (ΔQ = IΔt),
   an indicator of the residual number of possible recharges, using the result $Q^-$ of the charge variation sum during the discharge phases and displaying the result of the relation 1 - $Q^-/NQ_{max}$, and
   a charge ratio indicator using the result $\Sigma\Delta Q_i$ of the sommation of the charge variation during the charge and discharge phases and displaying the result of the relation $\eta = 100[1 + \Sigma\Delta Q_i/Q_{max}]$, in %,
   where $Q_{max}$ designates the predetermined value of the maximum charge of the accumulator and N the predetermined value of its maximum number of full recharge.

2. A component according to claim 1, characterized in that it further comprises an instantaneous consumption indicator associated with means for measuring the voltage variation (ΔV) at said regular time intervals (Δt).

3. A component according to claim 1, characterized in that the accumulator comprises a polymere solid state electrolyte made of thin layers having a thickness of 1 to 500 micrometers.

4. A component according to claim 1, characterized in that one of its external face comprises a solar cell array.

5. A component according to claim 1, characterized in that one of its external face comprises an electrode area for charging, using and data-exchanging, this area having the standard format of credit card electrodes.

6. A component according to claim 1, characterized in that it comprises, above the sheet pile (11, 12) forming the accumulator, at least one printed circuit board (21, 22, 23), one at least of said board being provided with apertures (24, 25, 26) wherein are placed at least some of the electronic circuit elements necessary to the operation of the component, the upper board (23) being provided with apertures (29, 32) wherein are placed state indicators apparent from the outside.

7. A component according to claim 1, characterized in that it comprises means for contacting its state indicators to an external accumulator.

8. A component according to claim 1, characterized in that it further comprises an encoding keyboard controlling means for determining an access towards its internal supply source or an external supply source.

9. A component according to claim 1, characterized in that it further comprises means for inhibiting the accumulator output when its charging state is lower than a predetermined threshold.

ACCUMULATEUR

AFFICHEURS LCD — 6

MICRO CONTROLEUR — 5

CLAVIER OPTIONNEL — 7

CELLULE SOLAIRE — 4

CHARGEUR — 2

1

3.2    3.1    3.3

*FIGURE 1*

*Figure 2.1*

*Figure 2.2*

FIGURE 3

FIGURE 4.1

FIGURE 4.2